# EUROPÄISCHE PATENTSCHRIFT

(11) **EP 3 662 179 B1**
(45) Veröffentlichungstag und Bekanntmachung des Hinweises auf die Patenterteilung: **07.06.2023**
(21) Anmeldenummer: 18752127.3
(22) Anmeldetag: 03.08.2018
(51) Int. Cl.: F16F 9/58, F16F 9/06, F16F 9/02

(54) **HYDROPNEUMATISCHE KOLBENZYLINDERANORDNUNG**
HYDROPNEUMATIC PISTON-CYLINDER ASSEMBLY
SYSTÈME CYLINDRE-PISTON HYDROPNEUMATIQUE

(30) Priorität: 05.08.2017 DE 102017007444
(43) Veröffentlichungstag der Anmeldung: 10.06.2020
(73) Patentinhaber: Hydac Technology GmbH, 66280 Sulzbach (DE)
(72) Erfinder: WEBER, Norbert, 66125 Saarbrücken (DE)
(74) Vertreter: Bartels und Partner, Patentanwälte
(86) Internationale Anmeldenummer: PCT/EP2018/071139
(87) Internationale Veröffentlichungsnummer: WO 2019/030141

(56) Entgegenhaltungen:
- WO-A1-2017/157501
- DE-A1- 3 934 385
- DE-A1- 3 935 107
- DE-A1- 4 226 754
- DE-A1-102016 003 153
- US-B1- 6 814 348

## Beschreibung

Die Erfindung betrifft eine hydropneumatische Kolbenzylinderanordnung, insbesondere für den Einsatz als Feder- und/oder Stoßdämpferelement, mit den Merkmalen im Oberbegriff des Anspruchs 1.

Kolbenzylinderanordnungen dieser Gattung sind Stand der Technik, vgl. beispielsweise DE 10 2011 010 070 A1. Solche Kolbenzylinderanordnungen können für unterschiedliche Anwendungszwecke zum Einsatz kommen. Neben ihrer Verwendung in der allgemeinen Technik als Schwingungsdämpfer oder Schockabsorber oder dergleichen, ist ein besonders bevorzugtes Anwendungsgebiet der Einsatz bei Achsaufhängungen von Fahrzeugen, insbesondere als Federbein zur hydropneumatischen Achsfederung. Bei diesem mobilen Einsatz handelt es sich häufig um Nutz- oder Großfahrzeuge, wie Auto- und Mobilkräne, Flurförderfahrzeuge oder dergleichen. Solche Fahrzeuge werden üblicherweise in verschiedenen Lastzuständen gefahren. Bei Leerfahrten ist die Belastung relativ gering, während sie nach Aufnahme einer Last wesentlich erhöht ist. In beiden Lastbereichen soll ein Federungssystem eine Federcharakteristik zur Verfügung stellen, die einen sicheren Betrieb des Fahrzeugs bei schonendem Transport der Nutzlast und bei angemessenem Komfort für den Fahrer unter unterschiedlichen Belastungen sicherstellt.

Die DE 39 35 107 A1 offenbart eine hydropneumatische Kolbenzylinderanordnung, insbesondere für den Einsatz als Feder- und/oder Stoßdämpferelement, mit einem mit unterschiedlichen Lasten beaufschlagbaren Zylinder, dessen Zylinderraum eine Hydraulikflüssigkeit aufnimmt, und mit einem pneumatischen Federspeicher, der den Zylinder gegen die Lasten abstützt und mit der Hydraulikflüssigkeit im Zylinderraum in Wirkverbindung ist, wobei der pneumatische Federspeicher aus mindestens zwei zu einer Baueinheit zusammengefassten Speichereinrichtungen besteht, die unabhängig voneinander und aufgrund unterschiedlicher Vorspanndrücke voneinander unabhängige eigene Federkennlinien aufweisen, wobei die jeweiligen Federkennlinien zusammengefasst eine Gesamt-Federkennlinie ergeben, wobei beide Speichereinrichtungen durch Kolbenspeicher gebildet sind, wobei ein erster Kolbenspeicher mit seinem kreiszylindrischen weiteren Speichergehäuse in dem die Hydraulikflüssigkeit aufnehmenden Zylinderraum des Zylinders entlang dessen Achse bewegbar und zumindest an dessen offenem Ende geführt ist, wobei zumindest in einem Betriebszustand ein Trennkolben eines zweiten Kolbenspeichers in dem einen Speichergehäuse zwei Fluidräume voneinander separiert, wobei das eine Speichergehäuse in einem weiteren Speichergehäuse des zweiten Kolbenspeichers zwei weitere Fluidräume voneinander separiert, und wobei das weitere Speichergehäuse im Zylinder nochmals einen weiteren Fluidraum begrenzt.

Kolbenspeicher lassen sich besonders kostengünstig herstellen und zeichnen sich durch eine lange Lebensdauer aus.

Die US 6 814 348 B1, die DE 39 34 385 A1 und die DE 42 26 754 A1 offenbaren weitere Kolbenzylinderanordnungen.

Die Erfindung stellt sich die Aufgabe, eine verbesserte hydropneumatische Kolbenzylinderanordnung der eingangs genannten Gattung zur Verfügung zu stellen, deren Federcharakteristik an unterschiedliche Lastbereiche anpassbar ist.

Erfindungsgemäß ist diese Aufgabe durch eine hydropneumatische Kolbenzylinderanordnung gelöst, die die Merkmale des Patentanspruchs 1 in seiner Gesamtheit aufweist.

Gemäß dem kennzeichnenden Teil des Anspruchs 1 zeichnet sich die erfindungsgemäße Kolbenzylinderanordnung dadurch aus, dass alle Fluidräume, die in Richtung eines Verschlusskörpers des Zylinders angeordnet sind, unter Bildung eines gemeinsamen Gesamt-Fluidraumes ineinander übergehen.

Ferner ist vorgesehen, dass der pneumatische Federspeicher aus mindestens zwei zu einer Baueinheit zusammengefassten Speichereinrichtungen besteht, die unabhängig voneinander aufgrund unterschiedlicher Vorspanndrücke voneinander unabhängige, eigene Federkennlinien aufweisen, wobei die jeweiligen Federkennlinien zusammengefasst eine Gesamt-Federkennlinie ergeben.

Durch Einstellen der Speichereinrichtungen auf einen zugeordneten Lastbereich ist die Federcharakteristik vorteilhaft an verschiedene Lastbereiche anpassbar. Die Speichereinrichtungen wirken unabhängig voneinander und sind nicht mechanisch starr gekoppelt. Durch die Zusammenfassung der Speichereinrichtungen zur gemeinsamen Baueinheit ergänzen sich die Speichereinrichtungen wirkungsmäßig, so dass sich eine Gesamt-Federkennlinie ergibt. Bei kompakter und kostengünstiger Bauweise ist dadurch ein hoch effizientes und langlebiges Feder- und/oder Stoßdämpferelement bereitgestellt, das für mindestens zwei Lastbereiche optimiert ist.

In besonders vorteilhafter Ausführungsform sind beide Speichereinrichtungen in dem die Hydraulikflüssigkeit aufnehmenden Zylinderraum des Zylinders unter Bildung der Baueinheit aufgenommen. Das Federelement lässt sich dadurch als besonders kompaktes und für mobile Anwendungen vorteilhaft einsetzbares Federbein realisieren.

An dem aus dem offenen Ende des die Hydraulikflüssigkeit aufweisenden Zylinderraums des Zylinders vorstehenden Ende des Speichergehäuses des ersten Kolbenspeichers kann eine Anlenkstelle für die Lastaufnahme unmittelbar angebracht sein.

Der die Gasseite dieses Kolbenspeichers einschließende Trennkolben kann durch das kreiszylindrische Speichergehäuse des zweiten Kolbenspeichers gebildet sein, das im Speichergehäuse des ersten Kolbenspeichers bewegbar geführt ist. Diese Bauweise, bei der in teleskopartiger Anordnung das Speichergehäuse des ersten Kolbenspeichers im Zylinderraum und das Speichergehäuse des zweiten Kolbenspeichers im Speichergehäuse des ersten Kolbenspeichers geführt sind, ermöglicht eine besonders bauraumsparende Ausführung des Federelements.

Bei dieser Anordnung kann der vom Speichergehäuse des zweiten Kolbenspeichers gebildete Trennkolben die Medientrennung zwischen der Gasseite des ersten Kolbenspeichers und der Gasseite des zweiten Kolbenspeichers bilden. Ohne mechanische Verbindung sind dadurch die Kolbenspeicher mit ihren auf unterschiedliche, gewählte Vorspanndrücke eingestellten Gasseiten wirkungsmäßig miteinander starr gekoppelt, so dass sich ihre unterschiedlichen Kennlinien zu einer Gesamt-Federkennlinie ergänzen.

Der Trennkolben des zweiten Kolbenspeichers, der in dessen Speichergehäuse frei bewegbar geführt ist, bildet hierbei die Medientrennung zwischen der Gasseite des zweiten Kolbenspeichers und der Hydraulikflüssigkeit im Zylinderraum.

Am geschlossenen Ende des Zylinders kann der die Hydraulikflüssigkeit aufnehmende Zylinderraum durch einen einen Hydraulikanschluss aufweisenden Verschlusskörper abgeschlossen sein. Am Verschlusskörper kann die lasteinleitende Anlenkstelle unmittelbar angeordnet sein.

Mit besonderem Vorteil ist an den dem Verschlusskörper zugewandten Endbereichen der Speichergehäuse von erstem und zweitem Kolbenspeicher jeweils eine Anschlageinrichtung vorgesehen, deren erste das Ausfahren des Speichergehäuses des zweiten Kolbenspeichers aus dem Speichergehäuse des ersten Kolbenspeichers in einer Endstellung begrenzt und deren zweite das Ausfahren des Trennkolbens des zweiten Kolbenspeichers aus dessen Speichergehäuse, ebenfalls in einer Endstellung, begrenzt. Dadurch ist auch bei fehlendem Hydraulikdruck im Zylinderraum eine Begrenzung der größten Volumina der beiden Gasseiten gebildet. Bei der Montage des Federbeins ist daher auch die Gasseite des zweiten Kolbenspeichers noch vor dem Einsetzen in das Speichergehäuse des ersten Kolbenspeichers mit dem Vorspanndruck befüllbar, und die Gasseite des ersten Kolbenspeichers ist auch ohne wirksame Last und ohne Hydraulikdruck im Zylinderraum mit dem Vorspanndruck befüllbar.

Nachstehend ist die Erfindung anhand eines in der Zeichnung dargestellten Ausführungsbeispiels im Einzelnen erläutert. Es zeigen:
- Fig. 1: einen Längsschnitt des Ausführungsbeispiels der erfindungsgemäßen hydropneumatischen Kolbenzylinderanordnung; und
- Fig. 2: eine vergrößert gezeichnete Teildarstellung des in Fig. 1 mit II bezeichneten Bezirks.

Mit Bezug auf die beigefügte Zeichnung ist die erfindungsgemäße Kolbenzylinderanordnung am Beispiel eines hydropneumatischen Federbeins für den Einsatz zur Achsabstützung von Fahrzeugen beschrieben. Die Anordnung weist einen Zylinder 2 in Form eines kreiszylindrischen Rohrkörpers auf, dessen innerer Zylinderraum 4 an dem in der Zeichnung untenliegenden Ende durch einen als Anschweißteil ausgebildeten Verschlusskörper 6 abgeschlossen ist. Für die Lasteinleitung in den Zylinder 2 ist am freien Ende des Verschlusskörpers 6 mittels einer Verschraubung 8 ein Halteauge 10 angebracht, der eine Anlenkstelle 12 bildet. Durch den Verschlusskörper 6 ist das Ende des Zylinders 2 bis auf einen in den Zylinderraum 4 mündenden Kanal 14 vollständig geschlossen, der mit einem Hydraulikanschluss 16 in Verbindung ist, über den dem Zylinderraum 4 ein inkompressibles Medium, wie Hydraulikflüssigkeit, zuführbar ist. Am gegenüberliegenden, offenen Ende des Zylinders 2 ist mittels Verschraubung 18 eine Führungsbuchse 20 angebracht, die eine abgedichtete Durchführung für ein hohlzylinderförmiges Speichergehäuse 22 eines pneumatischen Federspeichers bildet. Dieses Speichergehäuse 22 ist an der Innenwand des Zylinders 2 entlang der Zylinderachse 24 verschiebbar geführt, wobei am Außenumfang des Speichergehäuses 22 ein Führungsband 26 und im Innenumfang der Führungsbuchse 20 eine Führungsleiste 28 eingelassen sind. Für die Abdichtung der Durchführung sind an der Führungsbuchse 20 Dichtringe 30, 32 und 34 in Ringnuten eingesetzt. Anstelle der für die Befestigung der Führungsbuchse 20 am Zylinder 2 gezeigten Verschraubung 18 könnte die Verbindung auch durch eine Schweißstelle oder durch Materialumformung gebildet sein.

Das Speichergehäuse 22 ist an dem dem Verschlusskörper 6 zugewandten Ende offen und am gegenüberliegenden Ende, das aus dem Zylinder 2 nach außen vorsteht, mittels eines Verschlusskörpers 36 abgeschlossen. Beim gezeigten Beispiel ist der Verschlusskörper 36 mittels eines Schraubgewindes 38 festgelegt und mittels eines Dichtringes 40 abgedichtet. Der Verschlusskörper 36, der im Speichergehäuse 22 eine Gasseite 42 begrenzt, weist am freien Ende einen zur Zylinderachse 24 koaxialen, vorstehenden Zapfen 46 auf. Mit diesem ist ein Auge 48 verschraubt, der, wie das Auge 10 am Verschlusskörper 6, eine Anlenkstelle 50 zur Lastübertragung bildet. Die Gasseite 42 des das Speichergehäuse 22 aufweisenden Federspeichers ist über ein im Zapfen 46 sitzendes Füllventil 44 mit einem kompressiblen Medium, wie N₂, mit einem gewählten Vorspanndruck füllbar. Dieser Federspeicher bildet einen Kolbenspeicher 49, dessen Gasseite 42 einerseits vom Verschlusskörper 36 abgeschlossen und andererseits von einem axial bewegbaren Trennkolben begrenzt ist, der durch das Speichergehäuse 52 eines zweiten pneumatischen Federspeichers gebildet ist. Dabei bildet das Ende dieses zweiten Speichergehäuses 52 zusammen mit einer Endplatte 54, die in die Gehäuseöffnung eingesetzt und dort mittels eines Spreng-ringes 56 festgelegt und durch einen Dichtring 58 abgedichtet ist, die Medientrennung zwischen der Gasseite 42 und einer Gasseite 60 des zweiten Federspeichers. Zur Befüllung der Gasseite 60 dieses zweiten Federspeichers ist in der Endplatte 54 ein zur Achse 24 koaxiales Füllventil 62 vorgesehen, über das ein kompressibles Medium, wie N₂, mit gewähltem Vorspanndruck einfüllbar ist. Das Speichergehäuse 52 dieses zweiten Federspeichers, der wie der erste Federspeicher durch einen weiteren Kolbenspeicher 51 gebildet ist, ist im Zylinderrohr des Speichergehäuses 22 des ersten Kolbenspeichers 49 mittels Führungsbändern 64 verschiebbar geführt und durch einen Dichtring 66 abgedichtet.

Die einerseits durch die Endplatte 54 abgedichtete Gasseite 60 des zweiten Kolbenspeichers 51 ist andererseits durch einen Trennkolben 68 begrenzt, der die Medientrennung zwischen dem kompressiblen Medium in der Gasseite 60 und dem inkompressiblen Medium im Zylinderraum 4 bildet. Der Trennkolben 68 ist an der Innenseite des Zylinderrohres des Speichergehäuses 52 frei bewegbar mittels einer Führungsleiste 70 geführt und durch einen Dichtring 72 abgedichtet.

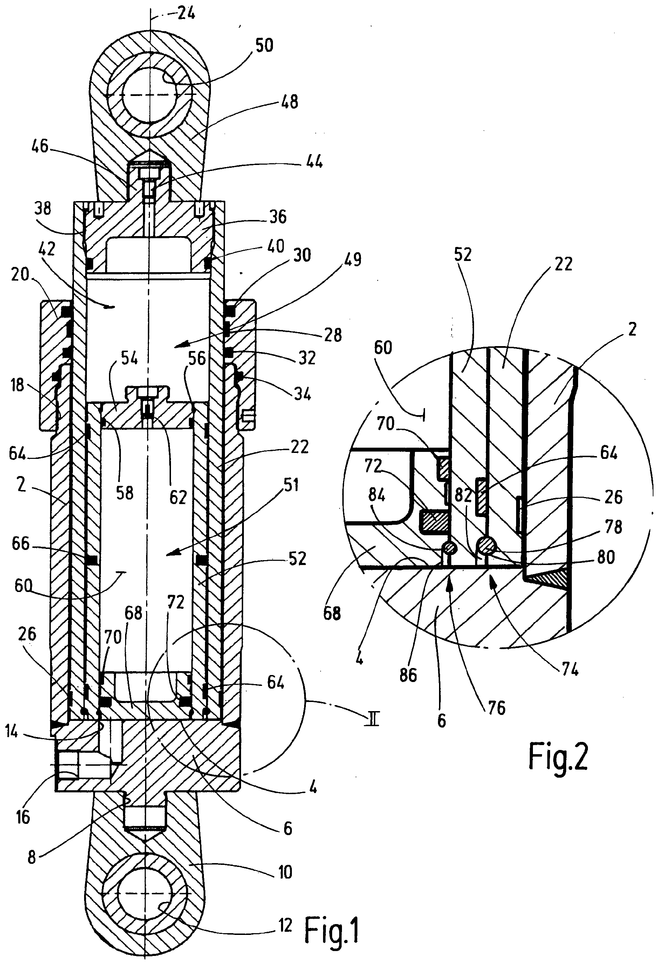

Wie der vergrößerten Darstellung der Fig. 2 deutlicher entnehmbar ist, ist an dem dem Verschlusskörper 6 zugewandten Ende der Zylinderrohre des Speichergehäuses 22 des ersten Kolbenspeichers 49 und des Speichergehäuses 52 des zweiten Kolbenspeichers 51 jeweils eine Anschlageinrichtung 74 und 76 vorgesehen. Die erste Anschlageinrichtung 74 weist einen Sprengring 78 auf, der in einer einen Sitz bildenden Nut 80 an der Innenwand des Speichergehäuses 22 axial unverschiebbar festgelegt ist. Durch Anlage an einer Schulter in einer am Endbereich des Speichergehäuses 52 gebildeten Ausnehmung 82 bildet der Sprengring 78 einen Endanschlag, der das Ausfahren des Speichergehäuses 52 aus dem Speichergehäuse 22 blockiert, jedoch das Einfahren des Speichergehäuses 52 in das Speichergehäuse 22 zulässt. In entsprechender Weise bildet ein Sprengring 84, der an der Innenseite des Speichergehäuses 52 axial unbeweglich festgelegt ist, mit der Schulter einer Ausnehmung 86 im Trennkolben 68 einen Endanschlag, der das Ausfahren des Trennkolbens 68 aus dem Speichergehäuse 52 blockiert, das Einfahren des Trennkolbens 68 in das Speichergehäuse 52 jedoch zulässt.

Bei dieser Anordnung ergibt sich folgende Betriebsweise:
Die Fig. 1 zeigt das Federbein im unbelasteten Zustand und bei drucklosem Zylinderraum 4, d.h. ohne im Zylinderraum 4 befindliche, unter Druck stehende Hydraulikflüssigkeit. Daher besitzt das Federbein die minimale Länge, wobei das Speichergehäuse 22 des ersten Kolbenspeichers 49 voll in den Zylinder 2 eingefahren ist und das Speichergehäuse 52 des zweiten Kolbenspeichers 51 in Richtung auf den Verschlusskörper 6 bewegt ist, so dass beide Speichergehäuse 22 und 52 in einer eingefahrenen Endstellung am Verschlusskörper 6 liegen. Die Gasseiten 42 und 60 der Kolbenspeicher 49 bzw. 51 sind mit unterschiedlichen Vorspanndrücken befüllt, wobei der Druck in der Gasseite 42 höher als in der Gasseite 60 gewählt ist, so dass der erste Kolbenspeicher 49 ein härteres Gaspolster als der zweite Kolbenspeicher 51 bildet. Bei drucklosem Zylinderraum 4 haben sowohl die Gasseite 42 des ersten Kolbenspeichers 49 als auch die Gasseite 60 des zweiten Kolbenspeichers 51 das größte Volumen, wobei der Trennkolben 68 des zweiten Kolbenspeichers 51 in die in den Figuren gezeigte Endstellung voll ausgefahren ist.

Bei zur Achsabstützung eingebautem Federbein wird der Zylinderraum 4 über den Hydraulikanschluss 16 von der Niveau-Regeleinrichtung des zugehörigen Fahrzeugs her mit Hydraulikflüssigkeit mit einem Druck versorgt, bei dem das auf die Montagelänge ausgezogene Federbein aufgrund des Hydraulikdrucks, der auf die effektive Kolbenfläche einwirkt, die durch den Trennkolben 68 und die umgebenden Speichergehäuse 22 und 52 gebildet ist, die erforderliche Abstützkraft des Federbeins erzeugt. Dabei sind die Vorspanndrücke der Gasseiten 42 und 60 so gewählt, dass bei einem ersten Lastzustand die Gasseite 42 das größte Volumen besitzt, so dass das Speichergehäuse 52 des zweiten Kolbenspeichers 51 voll ausgefahren ist, und dass bei diesem Lastzustand sich der Trennkolben 68 des zweiten Kolbenspeichers 51 in einer Zwischenstellung befindet, bei der ihm gegen das Druckpolster der Gasseite 60 ein Federweg zur Verfügung steht. Innerhalb dieses ersten Lastbereichs ist daher nur der zweite Kolbenspeicher 51 als Federspeicher wirksam, der eine Federwirkung des Federbeins mit einer ersten Federkennlinie zur Verfügung stellt. Kommt es zu einem weiteren Lastbereich, beispielsweise durch Beladen des Fahrzeugs, mit höheren Lasten und entsprechend von der Niveau-Regelung erhöhtem Hydraulikdruck im Zylinderraum 4, erhöht sich durch die Bewegung des Trennkolbens 68 der Druck der Gasseite 60, so dass sich die Federwirkung des zweiten Kolbenspeichers 51 versteift und dieser keinen Federweg mehr zur Verfügung stellt. Der bei dem zweiten Lastbereich höher belastete, durch das Speichergehäuse 52 des zweiten Kolbenspeichers 51 gebildete Trennkolben des ersten Kolbenspeichers 49 wirkt nun gegen das härtere Gaspolster im Gasraum 42 des ersten Kolbenspeichers 49, so dass dieser nunmehr als Federspeicher mit steilerer Federkennlinie wirksam ist und dadurch in dem weiteren Lastbereich die Federung mit der veränderten Federcharakteristik zur Verfügung stellt. Während mit zwei Kolbenspeichern 49 und 51 eine zweistufige Änderung der Federkennlinie beschrieben ist, versteht es sich, dass für die Anpassung an mehr als zwei in Frage kommende Lastbereiche auch eine mehrstufige Anordnung hintereinander geschalteter pneumatischer Federspeicher vorgesehen sein könnte.

## Patentansprüche

1. Hydropneumatische Kolbenzylinderanordnung, insbesondere für den Einsatz als Feder- und/oder Stoßdämpferelement, mit einem mit unterschiedlichen Lasten beaufschlagbaren Zylinder (2), dessen Zylinderraum (4) eine Hydraulikflüssigkeit aufnimmt, und mit einem pneumatischen Federspeicher, der den Zylinder (2) gegen die Lasten abstützt und mit der Hydraulikflüssigkeit im Zylinderraum (4) in Wirkverbindung ist, wobei der pneumatische Federspeicher aus mindestens zwei zu einer Baueinheit zusammengefassten Speichereinrichtungen (49, 51) besteht, die unabhängig voneinander und aufgrund unterschiedlicher Vorspanndrücke voneinander unabhängige eigene Federkennlinien aufweisen, wobei die jeweiligen Federkennlinien zusammengefasst eine Gesamt-Federkennlinie ergeben, wobei beide Speichereinrichtungen durch Kolbenspeicher (49, 51) gebildet sind, wobei ein erster Kolbenspeicher (49) mit seinem kreiszylindrischen weiteren Speichergehäuse (22) in dem die Hydraulikflüssigkeit aufnehmenden Zylinderraum (4) des Zylinders (2) entlang dessen Achse (24) bewegbar und zumindest an dessen offenem Ende geführt ist, wobei zumindest in einem Betriebszustand ein Trennkolben (68) eines zweiten Kolbenspeichers (51) in dem einen Speichergehäuse (52) zwei Fluidräume voneinander separiert, wobei das eine Speichergehäuse (52) in einem weiteren Speichergehäuse (22) des zweiten Kolbenspeicher (51) zwei weitere Fluidräume voneinander separiert, und wobei das weitere Speichergehäuse (22) im Zylinder (2) nochmals einen weiteren Fluidraum begrenzt, **dadurch gekennzeichnet, dass** alle Fluidräume, die in Richtung eines Verschlusskörpers (6) des Zylinders (2) angeordnet sind, unter Bildung eines gemeinsamen Gesamt-Fluidraumes ineinander übergehen.

2. Kolbenzylinderanordnung nach Anspruch 1, **dadurch gekennzeichnet, dass** beide Speichereinrichtungen (49, 51) in dem die Hydraulikflüssigkeit aufnehmenden Zylinderraum (4) des Zylinders (2) unter Bildung der Baueinheit aufgenommen sind.

3. Kolbenzylinderanordnung nach Anspruch 1 oder 2, **dadurch gekennzeichnet, dass** die beiden Speichereinrichtungen (49, 51) derart voneinander unabhängig sind, dass diese frei von einer mechanisch festen Verbindung miteinander in axialer Richtung relativ zueinander verfahrbar geführt sind.

4. Kolbenzylinderanordnung nach einem der vorstehenden Ansprüche, **dadurch gekennzeichnet, dass** der die Gasseite (42) des ersten Kolbenspeichers (49) einschließende Trennkolben durch das kreiszylindrische Speichergehäuse (52) des zweiten Kolbenspeichers (51) gebildet ist, das in dem Speichergehäuse (22) des ersten Kolbenspeichers (49) bewegbar geführt ist.

5. Kolbenzylinderanordnung nach Anspruch 4, **dadurch gekennzeichnet, dass** der vom Speichergehäuse (52) des zweiten Kolbenspeichers (51) gebildete Trennkolben die Medientrennung zwischen der Gasseite (42) des ersten Kolbenspeichers (49) und der Gasseite (60) des zweiten Kolbenspeichers (51) bildet.

6. Kolbenzylinderanordnung nach Anspruch 5, **dadurch gekennzeichnet, dass** der Trennkolben (68) des zweiten Kolbenspeichers (51), der in dessen Speichergehäuse (52) frei bewegbar geführt ist, die Medientrennung zwischen der Gasseite (60) des zweiten Kolbenspeichers (51) und der Hydraulikflüssigkeit im Zylinderraum (4) des Zylinders (2) bildet.

7. Kolbenzylinderanordnung nach einem der vorstehenden Ansprüche, **dadurch gekennzeichnet, dass** an dem geschlossenen Ende des Zylinders (2) der die Hydraulikflüssigkeit aufnehmende Zylinderraum (4) durch den einen Hydraulikanschluss (16) aufweisenden Verschlusskörper (6) abgeschlossen ist.

8. Kolbenzylinderanordnung nach einem der vorstehenden Ansprüche, **dadurch gekennzeichnet, dass** an den dem Verschlusskörper (6) zugewandten Endbereichen der Speichergehäuse (22, 52) von erstem (49) und zweitem Kolbenspeicher (51) jeweils eine Anschlageinrichtung (74, 76) vorgesehen ist, deren erste (74) das Ausfahren des Speichergehäuses (52) des zweiten Kolbenspeichers (51) aus dem Speichergehäuse (22) des ersten Kolbenspeichers (49) in einer Endstellung begrenzt und deren zweite (76) das Ausfahren des Trennkolbens (68) des zweiten Kolbenspeichers (51) aus dessen Speichergehäuse (52) ebenfalls in einer Endstellung begrenzt.

9. Kolbenzylinderanordnung nach einem der vorstehenden Ansprüche, **dadurch gekennzeichnet, dass** durch Anlage an einer Schulter in einer am Endbereich des Speichergehäuses (52) gebildeten Ausnehmung (82) ein Sprengring (78) einen Endanschlag bildet, der das Ausfahren des Speichergehäuses (52) aus dem weiteren Speichergehäuse (22) blockiert, jedoch das Einfahren des Speichergehäuses (52) in das weitere Speichergehäuse (22) zulässt.

10. Kolbenzylinderanordnung nach einem der vorstehenden Ansprüche, **dadurch gekennzeichnet, dass** ein weiterer Sprengring (84) der an der Innenseite des Speichergehäuses (52) axial unbeweglich festgelegt ist, mit einer Schulter einer Ausnehmung (86) im Trennkolben (68) einen Endanschlag bildet, der das Ausfahren des Trennkolbens (68) aus dem Speichergehäuse (52) blockiert, das Einfahren dieses Trennkolbens (68) in das Speichergehäuse (52) jedoch zulässt.

11. Kolbenzylinderanordnung nach einem der vorstehenden Ansprüche, **dadurch gekennzeichnet, dass** die beiden Speichergehäuse (22, 52) zylindrische Wandteile aufweisen, die in konzentrischer Anordnung zumindest teilweise ineinander berührend geführt sind.

12. Kolbenzylinderanordnung nach einem der vorstehenden Ansprüche, **dadurch gekennzeichnet, dass** zumindest teilweise
- die zylindrische Außenwand des weiteren Speichergehäuses (22) entlang der Innenwand des Zylinders (2),
- die zylindrische Außenwand des einen Speichergehäuses (52) entlang der Innenwand des weiteren Speichergehäuses (22), und
- die zylindrische Außenwand des Trennkolbens (68) entlang der Innenwand des einen Speichergehäuses (52)
geführt sind.

13. Kolbenzylinderanordnung nach einem der vorstehenden Ansprüche, **dadurch gekennzeichnet, dass** die zylindrischen Wandteile der beiden Speichergehäuse (22, 52) zu einer gemeinsamen Endseite hin jeweils von einem Verschlusskörper (36, 54) abgeschlossen und an der gegenüberliegenden Endseite offen ausgebildet sind.

14. Kolbenzylinderanordnung nach einem der vorstehenden Ansprüche, **dadurch gekennzeichnet, dass** in einer Grundstellung die offenen Endseiten der zylindrischen Wandteile beider Speichergehäuse (22, 52) auf dem Verschlusskörper (6) des Zylinders (2) aufstehen, an dem bei aufrechter Anordnung der Trennkolben (68) bodenseitig mit seiner Unterseite in Anlage ist.

15. Kolbenzylinderanordnung nach einem der vorstehenden Ansprüche, **dadurch gekennzeichnet, dass** zumindest in der Grundstellung der axiale Verfahrweg des Trennkolbens (68) in dem einen Speichergehäuse (52) größer ist als der Verfahrweg dieses einen Speichergehäuses (52) im weiteren Speichergehäuse (22).

16. Kolbenzylinderanordnung nach einem der vorstehenden Ansprüche, **dadurch gekennzeichnet, dass** das eine Speichergehäuse (52) endseitig abgedichtet in dem weiteren Speichergehäuse (22) längs verfahrbar geführt ist, das endseitig abgedichtet im Zylinder (2) längs verfahrbar geführt ist.

17. Kolbenzylinderanordnung nach einem der Ansprüche 13 bis 16, **dadurch gekennzeichnet, dass** die Kolbenflächen am bodenseitigen Ende von Trennkolben (68) und dem einen Speichergehäuse (52) gleich ist zu der Kolbenfläche des kopfseitig mittels des Verschlusskörpers (54) verschlossenen Endes des einen Speichergehäuses (52).

18. Kolbenzylinderanordnung nach einem der Ansprüche 13 bis 17, **dadurch gekennzeichnet, dass** die Kolbenflächen am bodenseitigen Ende von Trennkolben (68), dem einen Speichergehäuse (52) und dem weiteren Speichergehäuse (22) gleich ist zu der Kolbenfläche des kopfseitig mittels des Verschlusskörpers (36) verschlossenen Endes des einen Speichergehäuses (52).

## Claims

1. Hydropneumatic piston cylinder arrangement, in particular for use as a spring element and/or shock absorber element, having a cylinder (2) which can be subjected to different loads, the cylinder chamber (4) of which accommodates a hydraulic fluid, and having a pneumatic spring-loaded accumulator which supports the cylinder (2) against the loads and is operatively connected to the hydraulic fluid in the cylinder chamber (4), wherein the pneumatic spring-loaded accumulator consists of at least two accumulator devices (49, 51) combined to form one structural unit which, independently of each other and due to different precharge pressures, have their own independent spring characteristics, wherein the respective spring characteristics, taken together, produce an overall spring characteristic, wherein both accumulator devices are formed by piston accumulators (49, 51), wherein a first piston accumulator (49) with its cylindrical further accumulator housing (22) is movable in the cylinder chamber (4), accommodating the hydraulic fluid, of the cylinder (2), along the axis (24) of said cylinder and is guided at least at the open end thereof, wherein, at least in one operating state, a separating piston (68) of a second piston accumulator (51) separates two fluid chambers from each other in the one accumulator housing (52), wherein the one accumulator housing (52) separates two further fluid chambers from each other in a further accumulator housing (22) of the second piston accumulator (51), and wherein the further accumulator housing (22) again defines a further fluid chamber in the cylinder (2), **characterised in that** all fluid chambers which are arranged towards a closure body (6) of the cylinder (2) merge into each other to form a common overall fluid chamber.

2. Piston cylinder arrangement according to claim 1, **characterised in that** both accumulator devices (49, 51) are accommodated in the cylinder chamber (4), accommodating the hydraulic fluid, of the cylinder (2) to form the structural unit.

3. Piston cylinder arrangement according to claim 1 or 2, **characterised in that** the two accumulator devices (49, 51) are independent of each other in such a manner that they are guided so as to be movable with respect to each other in the axial direction free from a mechanically fixed connection to each other.

4. Piston cylinder arrangement according to one of the preceding claims, **characterised in that** the separating piston enclosing the gas side (42) of the first piston accumulator (49) is formed by the cylindrical accumulator housing (52) of the second piston accumulator (51) which is movably guided in the accumulator housing (22) of the first piston accumulator (49).

5. Piston cylinder arrangement according to claim 4, **characterised in that** the separating piston formed by the accumulator housing (52) of the second piston accumulator (51) forms the media separation between the gas side (42) of the first piston accumulator (49) and the gas side (60) of the second piston accumulator (51).

6. Piston cylinder arrangement according to claim 5, **characterised in that** the separating piston (68) of the second piston accumulator (51), which is guided so as to be freely movable in its accumulator housing (52), forms the media separation between the gas side (60) of the second piston accumulator (51) and the hydraulic fluid in the cylinder chamber (4) of the cylinder (2).

7. Piston cylinder arrangement according to one of the preceding claims, **characterised in that** at the closed end of the cylinder (2), the cylinder chamber (4) accommodating the hydraulic fluid is closed off by a closure body (6) having a hydraulic port (16).

8. Piston cylinder arrangement according to one of the preceding claims, **characterised in that** a stop device (74, 76) is provided in each case on the end regions, directed towards the closure body (6), of the accumulator housing (22, 52) of the first (49) and second piston accumulators (51), the first stop device (74) limiting the extension of the accumulator housing (52) of the second piston accumulator (51) out of the accumulator housing (22) of the first piston accumulator (49), in an end position, and the second stop device (76) limiting the extension of the separating piston (68) of the second piston accumulator (51) out of its accumulator housing (52), likewise in an end position.

9. Piston cylinder arrangement according to one of the preceding claims, **characterised in that**, by abutting upon a shoulder in a recess (82) formed on the end region of the accumulator housing (52), a circlip (78) forms a limit stop which obstructs extension of the accumulator housing (52) out of the further accumulator housing (22) but permits retraction of the accumulator housing (52) into the further accumulator housing (22).

10. Piston cylinder arrangement according to one of the preceding claims, **characterised in that** a further circlip (84), which is fixed to the inside of the accumulator housing (52) so as to be axially immobile, forms a limit stop with a shoulder of a recess (86) in the separating piston (68), which limit stop obstructs extension of the separating piston (68) out of the accumulator housing (52) but permits retraction of this separating piston (68) into the accumulator housing (52).

11. Piston cylinder arrangement according to one of the preceding claims, **characterised in that** the two accumulator housings (22, 52) have cylindrical wall parts which are guided in concentric arrangement at least partially into one another so as to be touching.

12. Piston cylinder arrangement according to one of the preceding claims, **characterised in that** at least partially
- the cylindrical outer wall of the further accumulator housing (22) is guided along the inner wall of the cylinder (2),
- the cylindrical outer wall of the one accumulator housing (52) is guided along the inner wall of the further accumulator housing (22), and
- the cylindrical outer wall of the separating piston (68) is guided along the inner wall of the one accumulator housing (52).

13. Piston cylinder arrangement according to one of the preceding claims, **characterised in that** the cylindrical wall parts of the two accumulator housings (22, 52) are each closed off towards a common end by a closure body (36, 54) and are open at the opposing end.

14. Piston cylinder arrangement according to one of the preceding claims, **characterised in that**, in a normal position, the open ends of the cylindrical wall parts of both accumulator housings (22, 52) stand up on the closure body (6) of the cylinder (2), against which, in the upright arrangement, the underside of the separating piston (68) is in contact on the base side.

15. Piston cylinder arrangement according to one of the preceding claims, **characterised in that**, at least in the normal position, the axial travel path of the separating piston (68) in the one accumulator housing (52) is greater than the travel path of this one accumulator housing (52) in the further accumulator housing (22).

16. Piston cylinder arrangement according to one of the preceding claims, **characterised in that** the one accumulator housing (52) is guided in a longitudinally displaceable manner, sealed at the end, in the further accumulator housing (22) which is guided in a longitudinally displaceable manner, sealed at the end, in the cylinder (2).

17. Piston cylinder arrangement according to one of claims 13 to 16, **characterised in that** the piston surfaces on the base-side end of the separating piston (68) and the one accumulator housing (52) is equal to the piston surface of the end of the one accumulator housing (52) which is closed at the head end by means of the closure body (54).

18. Piston cylinder arrangement according to one of claims 13 to 17, **characterised in that** the piston surfaces on the base-side end of the separating piston (68), the one accumulator housing (52) and the further accumulator housing (22) is equal to the piston surface of the end of the one accumulator housing (52) which is closed at the head end by means of the closure body (36).

## Revendications

1. Système hydropneumatique à cylindre - piston, à utiliser en particulier comme élément d'amortissement de ressort et/ou de choc, comprenant un cylindre (2), qui peut être soumis à des charges différentes et dont l'espace (4) dans le cylindre reçoit un liquide hydraulique, et comprenant un accumulateur pneumatique à ressort, qui soutient le cylindre (2) à l'encontre des charges et qui est en liaison d'action avec le liquide hydraulique dans l'espace (4) dans le cylindre, dans lequel l'accumulateur pneumatique à ressort est constitué d'au moins deux dispositifs (49, 51) d'accumulation rassemblés en une unité de construction, qui ont, indépendamment l'un de l'autre et en raison de pressions de précontrainte différentes, des courbes caractéristiques de ressort propres indépendantes l'une de l'autre, dans lequel les courbes caractéristiques de ressort respectives donnent, en étant rassemblées, une courbe caractéristique de ressort d'ensemble, dans lequel les deux dispositifs d'accumulation sont formés par des accumulateurs (49, 51) à piston, dans lequel un premier accumulateur (49) à piston est, par son autre enveloppe (22) d'accumulateur cylindrique de section droite circulaire, mobile dans la chambre (4), recevant le liquide hydraulique, du cylindre (2) le long de son axe (24) et est guidé au moins à son extrémité ouverte, dans lequel, au moins dans un état de fonctionnement, un piston (68) de séparation d'un deuxième accumulateur (51) à piston sépare, dans la une enveloppe (52) de l'accumulateur, deux espaces pour du fluide, dans lequel la une enveloppe (52) d'accumulateur sépare, dans une autre enveloppe (22) du deuxième accumulateur (51) à piston, deux autres espaces pour du fluide, et dans lequel l'autre enveloppe (22) d'accumulateur délimite, dans le cylindre (2), encore un autre espace pour du fluide, **caractérisé en ce que** tous les espaces pour du fluide, qui sont disposés dans la direction d'un obturateur (6) du cylindre (2) se passent de l'un à l'autre avec formation d'un espace pour du fluide d'ensemble commun.

2. Système à cylindre - piston suivant la revendication 1, **caractérisé en ce que** les deux dispositifs (49, 51) d'accumulateur sont reçus avec formation d'une unité de construction dans l'espace (4), recevant le liquide hydraulique, du cylindre (2).

3. Système à cylindre - piston suivant la revendication 1 ou 2, **caractérisé en ce que** les deux dispositifs (49, 51) d'accumulateur sont séparés indépendamment l'un de l'autre, de manière à ce que ceux-ci soient guidés, avec possibilité de se déplacer l'un par rapport à l'autre dans la direction axiale sans une liaison fixe mécaniquement entre eux.

4. Système à cylindre - piston suivant l'une des revendications précédentes, **caractérisé en ce que** le piston de séparation enfermant le côté (42) de gaz du premier accumulateur (49) à piston, est formé par l'enveloppe (52) cylindrique de section transversale circulaire du deuxième accumulateur (51) à piston, qui est guidée, avec possibilité de se déplacer, dans l'enveloppe (22) du premier accumulateur (49) à piston.

5. Système à cylindre - piston suivant la revendication 4, **caractérisé en ce que** le piston de séparation, formé par l'enveloppe (52) du deuxième accumulateur (51) à piston, forme la séparation entre fluides entre le côté (42) de gaz du premier accumulateur (49) à piston et le côté (60) de gaz du deuxième accumulateur (51) à piston.

6. Système à cylindre - piston suivant la revendication 5, **caractérisé en ce que** le piston (68) de séparation du deuxième accumulateur (51) à piston, qui est guidé, avec possibilité de se déplacer librement dans son enveloppe (52) d'accumulateur, forme la séparation des milieux entre le côté (60) de gaz du deuxième accumulateur (51) à piston et le liquide hydraulique dans l'espace (4) du cylindre (2).

7. Système à cylindre - piston suivant l'une des revendications précédentes, **caractérisé en ce qu'**à l'autre extrémité fermée du cylindre (2), l'espace (4) du cylindre, recevant le liquide hydraulique, est fermé par un obturateur (6) ayant un raccord (16) hydraulique.

8. Système à cylindre - piston suivant l'une des revendications précédentes, **caractérisé en ce qu'**il est prévu, aux parties d'extrémité, tournées vers l'obturateur (6), des enveloppes (22, 52) du premier (49) et du deuxième accumulateur (51) à piston, respectivement un dispositif (74, 76) à butée, dont le premier (74) limite, dans une position d'extrémité, la sortie de l'enveloppe (52) du deuxième accumulateur (51) à piston de l'enveloppe (22) du premier accumulateur (49) à piston, et dont le deuxième (76) limite, également dans une position d'extrémité, la sortie du piston (68) de séparation du deuxième accumulateur (51) à piston de son enveloppe (52) d'accumulateur.

9. Système à cylindre - piston suivant l'une des revendications précédentes, **caractérisé en ce que**, par contact avec un épaulement, dans un évidement (82) formé dans une partie d'extrémité de l'enveloppe (52) d'accumulateur, un jonc (78) élastique forme une butée de fin de course, qui bloque la sortie de l'enveloppe (52) d'accumulateur de l'autre enveloppe (22) d'accumulateur, mais autorise l'entrée de l'enveloppe (52) d'accumulateur dans l'autre enveloppe (22) d'accumulateur.

10. Système à cylindre - piston suivant l'une des revendications précédentes, **caractérisé en ce qu'**un autre jonc (84) élastique, qui est fixé de manière à ne pas pouvoir se déplacer axialement, à la face intérieure de l'enveloppe (52) d'accumulateur, forme, par un épaulement d'un évidement (86) du piston (68) de séparation, une butée de fin de course, qui bloque la sortie du piston (68) de séparation de l'enveloppe (52) d'accumulateur, mais autorise l'entrée de ce piston (68) de séparation dans l'enveloppe (52) d'accumulateur.

11. Système à cylindre - piston suivant l'une des revendications précédentes, **caractérisé en ce que** les deux enveloppes (22, 52) d'accumulateur ont des parties de paroi cylindriques, qui sont guidées, en se touchant, l'une dans l'autre au moins en partie, suivant un agencement concentrique.

12. Système à cylindre - piston suivant l'une des revendications précédentes, **caractérisé en ce que**, au moins en partie
- la paroi extérieure cylindrique de l'autre enveloppe (22) d'accumulateur est guidée le long de la paroi intérieure du cylindre (2),
- la paroi extérieure cylindrique de la une enveloppe (52) d'accumulateur est guidée le long de la paroi intérieure de l'autre enveloppe (22) d'accumulateur, et
- la paroi extérieure cylindrique du piston (68) de séparation est guidée le long de la paroi intérieure de la une enveloppe (52) d'accumulateur.

13. Système à cylindre - piston suivant l'une des revendications précédentes, **caractérisé en ce que** les parties de paroi cylindriques des deux enveloppes (22, 52) d'accumulateur sont fermées vers un côté d'extrémité commun respectivement par un obturateur (36, 54) et sont ouvertes du côté de l'extrémité opposée.

14. Système à cylindre - piston suivant l'une des revendications précédentes, **caractérisé en ce que**, dans une position de base, les côtés d'extrémité ouverts des parties de parois cylindriques des deux enveloppes (22, 52) d'accumulateur sont debout sur l'obturateur (6) du cylindre (2), où, dans un agencement vertical, le piston (68) de séparation est, du côté du sol, en contact par son côté inférieur.

15. Système à cylindre - piston suivant l'une des revendications précédentes, **caractérisé en ce qu'**au moins dans la position de base, la course de déplacement axiale du piston (68) de séparation dans la une enveloppe (52) d'accumulateur est plus grande que la course de déplacement de la une enveloppe (52) d'accumulateur dans l'autre enveloppe (22) d'accumulateur.

16. Système à cylindre - piston suivant l'une des revendications précédentes, **caractérisé en ce que** la une enveloppe (52) d'accumulateur peut, en étant rendue étanche du côté de l'extrémité, être déplacée suivant la longueur dans l'autre enveloppe (22) d'accumulateur, laquelle, en étant rendue étanche du côté de l'extrémité, est guidée de manière à pouvoir être déplacée suivant la longueur dans le cylindre (2) .

17. Système à cylindre - piston suivant l'une des revendications 13 à 16, **caractérisé en ce que** la surface de piston, à l'extrémité du côté du fond du piston (68) de séparation, et celle de la une enveloppe (52) d'accumulateur sont égales à la surface du piston de l'extrémité, fermée du côté de la tête au moyen de l'obturateur (54), de la une enveloppe (52) d'accumulateur.

18. Système à cylindre - piston suivant l'une des revendications 13 à 17, **caractérisé en ce que** la surface du piston, à l'extrémité du côté du fond du piston (68) de séparation, celle de la une enveloppe (52) d'accumulateur et celle de l'autre enveloppe (22) d'accumulateur est égale à la surface du piston de l'extrémité, fermée du côté de la tête au moyen de l'obturateur (36), de la une enveloppe (52) d'accumulateur.
